# EUROPÄISCHE PATENTANMELDUNG

(11) **EP 4 242 491 A1**
(43) Veröffentlichungstag der Anmeldung: **13.09.2023**
(21) Anmeldenummer: 23176654.4
(22) Anmeldetag: 31.08.2012
(51) Int. Cl.: F16H 57/00, F16C 3/02, F16H 55/06

(54) **ZAHNRAD MIT FEST VERBUNDENER ANTRIEBSWELLE**

(30) Priorität: 26.11.2011 DE 102011119514
(62) Teilanmeldung aus: 12761543.3
(71) Anmelder: KAP Precision Components GmbH, 36043 Fulda (DE)
(72) Erfinder: KASTRUP, Michael, 79189 Bad Krozingen (DE)
(74) Vertreter: Aera A/S

(57) **Zusammenfassung**

Die Erfindung betrifft ein Zahnrad drehfest auf einer Antriebswelle, wobei das Zahnrad aus gespritztem Kunststoff besteht und die Antriebswelle aus einem vom Zahnrad unterschiedlichem Kunststoffmaterial besteht, wobei die Welle vom Zahnrad umspritzt ist, wobei die Welle aus Kunststoff besteht und dass der Kunststoff des Zahnrades eine höhere Elastizität besitzt als der Kunststoff der Welle, und wobei die Welle, im Verbindungsbereich, an dem die Welle vom Zahnrad umspritzt ist, einen den Wellendurchmesser vergrößernden Verbindungsbereich aufweist.

## Beschreibung

Die Erfindung betrifft ein Zahnrad drehfest auf einer Antriebswelle, wobei das Zahnrad aus gespritztem Kunststoff besteht und die Antriebswelle aus einem vom Zahnrad unterschiedlichem Kunststoffmaterial besteht.

Bekannt sind Zahnräder aus Kunststoff aus unterschiedlichen Anwendungsgebieten, in denen eine Leistung übertragen oder die Kraftrichtung verändert werden soll. Der Einsatz von Kunststoffzahnrädern erfolgt dabei in Anwendungsgebieten, in denen eine geringere Leistung übertragen wird. Dies ist der Fall, da Kunststoffzahnräder eine geringere Leistung übertragen können als Metallzahnräder. Der Einsatz von Getrieben die Kunststoffzahnräder enthalten ist ebenfalls in Leichtbaugetriebe vorgesehen, da hierdurch Gewicht eingespart werden kann. Einsatzgebiete sind hierbei neben mobilen Werkzeugen, Küchengeräte sowie Spielzeuge.

Zum Einsatz kommen Kunststoffzahnräder ebenfalls in Getrieben, um einen geräuscharmen Antriebsstrang zu gewährleisten. Beim Eingriff von Metallzahnradzähnen ineinander und dem Abrollen der Metallzähne gegeneinander treten Abwälzgeräusche auf. Durch den Einsatz von Kunststoffzahnrädern kann die Geräuschentwicklung reduziert werden.

Die Getriebe- oder auch Antriebswellen, auf denen sich die Zahnräder befinden, sind aus Metall. Metall findet als Wellenmaterial hierbei deswegen vorzugsweise Verwendung, da Antriebswellen bei der Leistungsübertragung und Leistungswandlung durch Zahnräder bei jeder Umdrehung eine Biegebelastung erfahren und Metallwellen eine gute Langzeitbiegestabilität aufweisen.

Weiterhin werden Antriebswellen aus gehärtetem und oder legiertem Stahl verwendet, da diese eine erhöhte Dauerfestigkeit, einen verbesserten Korrosionsschutz sowie eine verbesserte Reibfestigkeit in den Lagerstellen aufweisen. Die Verwendung von legierten und gehärteten Stählen für Wellen ermöglicht hierbei auch das die Wellen, nach entsprechender Bearbeitung, eine hohe Oberflächengüte aufweisen können. Der Einsatz von vergüteten und gehärteten Stählen ist ebenfalls bei Getrieben, die nur eine geringe Leistung übertragen müssen von Vorteil. Hierbei weist die Welle dann an den Abstütz- bzw. Lagerstellen eine derart hohe Oberflächengüte auf, dass die Welle mit den Kontaktstellen des Getriebegehäuses ein Gleitlager, mit dem Gleitmittel Luft, bildet. Hierdurch kann auf den Einsatz von Wälzlagern für die Getriebelagerung verzichtet werden.

Um Welle und Zahnrad zu Verbinden gibt es verschiedene Verbindungstechniken. Am verbreitetsten sind die folgenden beiden Arten: Die Kunststoffzahnräder werden entweder auf die Wellen aufgepresst, sodass eine Presspassung die Höhe der möglichen Leistungsübertragung zwischen Welle und Zahnrad bestimmt, oder zwischen Welle und Zahnrad ist konstruktiv eine formschlüssige Verbindung wie z. B. durch eine Welle-Nabe-Verbindung in Form einer Keilwelle vorgesehen.

Die Verbindung von Kunststoffzahnrad und Metallantriebswelle weist hierbei jedoch verschiedene Nachteile auf. Aufgrund der unterschiedlichen Materialeigenschaften einer Metallwelle und eines Kunststoffzahnrades verhalten sich die jeweiligen Molekülgitter bei Belastung unterschiedlich. Dies führt dazu, das Lastspitzen die Verbindungsstelle von Welle und Zahnrad lockern oder beschädigen können. Somit wird die Höhe der übertragbaren Leistung kontinuierlich reduziert.

Ein weiterer Nachteil ist, dass die Herstellung einer veredelten gehärteten Antriebswelle ein aufwendiges kostenintensives mehrstufiges Verfahren ist. Hohe Materialkosten liegen auch deshalb vor, da das Veredeln des Stahles teuer ist. Durch Materialoptimierung der Kunststoffmaterialien und neue Fertigungsverfahren ist es zudem möglich, immer stabilere Zahnräder zu fertigen. Die Verwendung von Metallwellen bei Kunststoffgetrieben zeigt, das ein Versagen des Getriebes mittlerweile häufig auf einen Bruch, z. B. durch Sprödbruch, der Welle zurückzuführen ist. Dies tritt insbesondere dabei auf, wenn der Antriebsstrang blockiert ist und eine Lastspitze beim Anlaufen der Getriebewelle auftritt.

Aufgabe der Erfindung ist es, die zuvor genannten Nachteile des Standes der Technik zu beheben. Vorrangig ist hierbei die Bereitstellung eines Zahnrades mit fest verbundener Welle, welche keine Verbindungsstelle aufweist, die durch eine Dauerbelastung ermüdet oder zerstört wird.

Diese Aufgabe wird durch das eingangs beschriebene Zahnrad mit fest verbundener Antriebswelle erfüllt, indem erstens die Welle vom Zahnrad umspritzt ist, zweitens die Welle aus Kunststoff besteht und dass der Kunststoff des Zahnrades eine höhere Elastizität besitzt als der Kunststoff der Welle, und drittens die Welle, im Verbindungsbereich, an dem die Welle vom Zahnrad umspritzt ist, einen den Wellendurchmesser vergrößernden Verbindungsbereich aufweist.

Vorteilhaft bei der Verwendung von Kunststoff für die Antriebswelle ist, dass der Wellenwerkstoff im Vergleich zu Metall elastischer ist und die Gefahr von Sprödbruch bei Lastspitzen geringer ist. Die Langzeitstabilität aufgrund einer besseren Biegeelastizität ist ebenfalls deutlich erhöht.

Vorteilhafterweise treten bei einer Antriebswelle aus Kunststoff auch keine Korrosionsprobleme auf, da nur noch nicht korrodierende Materialien im Getriebe zum Einsatz kommen.

Von Vorteil ist, dass der Einsatz von Kunststoffwellen im Vergleich zu Metallwellen das Gewicht weiter reduziert.

Von Vorteil ist, dass Kunststoff Schallwellen und somit Geräusche schlechter leitet, als Metall. Durch den Einsatz von Kunststoffwellen wird die Körperschallleitung innerhalb des Getriebes weiter reduziert und auch der abgestrahlte Geräuschpegel wird reduziert.

Von Vorteil ist die Beschichtung der Antriebswelle für Speziallacke, wie z. B. Hartschichtlacke die Mithilfe von UV-Trocknung ausgehärtet werden. An den notwendigen Stellen der Antriebswelle können somit Reibund Gleiteigenschaften der Wellenoberfläche verbessert werden, um somit z. B. in der Lagerstelle der Welle eine Gleitlagerfunktionalität zwischen Antriebswelle und Gehäuse zu ermöglichen. Vorteilhafterweise weist der Verbindungsbereich der Antriebswelle die Form einer Scheibe auf, da somit ein gleichmäßiges Umspritzen des Zahnrades möglich ist. Dies kann auch dadurch erreicht werden, indem der Verbindungsbereich der Welle die Form einer koaxialen Ringscheibe besitzt.

Besonders vorteilhaft ist es, wenn die Scheibe Vorsprünge, Ausnehmungen, Öffnungen und/oder Anflachungen am äußeren Umfang und/oder an mindestens einer Seitenfläche aufweist, da hierdurch nach dem Umspritzen des Zahnrades ein guter Formschluss zwischen Antriebswelle und Zahnrad besteht. Eine weitere vorteilhafte Ausführungsform ist, wenn am äußeren Umfang der Scheibe Zähne vorstehen oder die Scheibe als Stirnzahnrad ausgeführt ist.

Von Vorteil ist es, wenn das Verhältnis von Wellendurchmesser zum Scheiben- oder Zahnraddurchmesser 1:3 bis 1:5 beträgt. Hierdurch ist ein gutes Verhältnis von der möglichen Leistungsbeaufschlagung zur Materialmenge vorgegeben.

Durch die Verwendung einer Hohlwelle für die Antriebswelle kann Material eingespart werden, bei gleichzeitig erhöhter Biegestabilität und Leistungsstabilität.

Ein Ausführungsbeispiel der Erfindung ist in den Zeichnungen dargestellt und wird im Folgenden näher beschrieben.
Figure 1: Perspektivische Ansicht der Antriebswelle
Figur 2: Draufsicht auf die Antriebswelle
Figur 3: Perspektivische Ansicht von verbundenem Zahnrad und Antriebswelle
Figur 4: Darstellung von Zahnrad mit fest verbundener Antriebswelle
Figur 5: Draufsicht auf Zahnrad und Antriebswelle

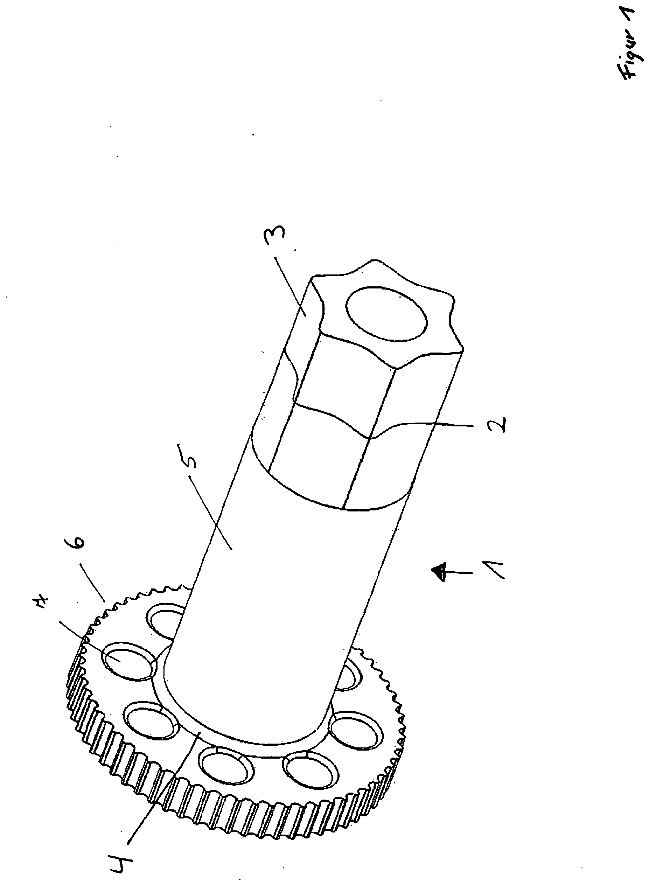

Figur 1 zeigt eine Variante der Antriebswelle 1 in einer perspektivischen Abbildung. Die Antriebswelle 1 weist an dem zum Betrachter hin gerichtetem Wellenende 2 eine Torxform auf, die Teil einer Kupplungseinrichtung 3 zum Verbinden mit weiteren Komponenten des Antriebsstranges ist. Von diesem Wellenende hin zu dem vom Betrachter abgewandten Wellenende 4 erstreckt sich ein Wellenabschnitt der Kunststoffwelle mit glatter Oberfläche 5. An den Wellenabschnitt 5 grenzt der vergrößerte Wellendurchmesser 6 an. Dieser ist in der dargestellten Variante in Form eines Stirnzahnrades ausgeführt, welches Öffnungen 7 aufweist. Die dargestellte Antriebswelle 1 ist als Hohlwelle ausgeführt.

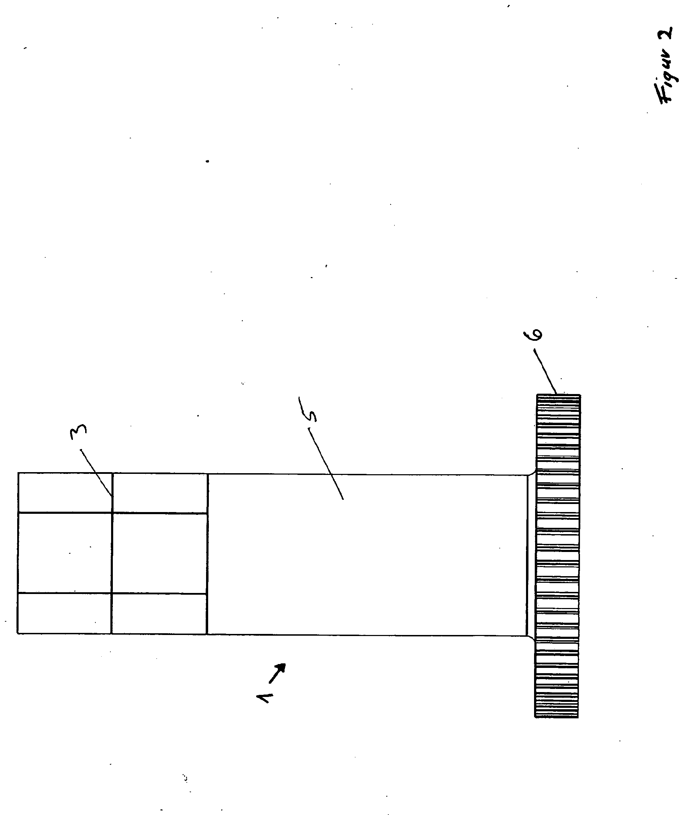

Figur 2 zeigt die Antriebswelle 1 in der Draufsicht. Erkennbar ist die Dreiteilung der Antriebswelle 1 in Wellenende in Torxform als der Kupplungseinrichtung 3, der Wellenabschnitt der Kunststoffwelle mit glatter Oberfläche 5 und der vergrößerte Wellendurchmesser 6. In dieser Variante wird der Lack zur Optimierung der Oberflächengüte u.a. im Wellenabschnitt der Kunststoffwelle mit glatter Oberfläche 5 aufgebracht.

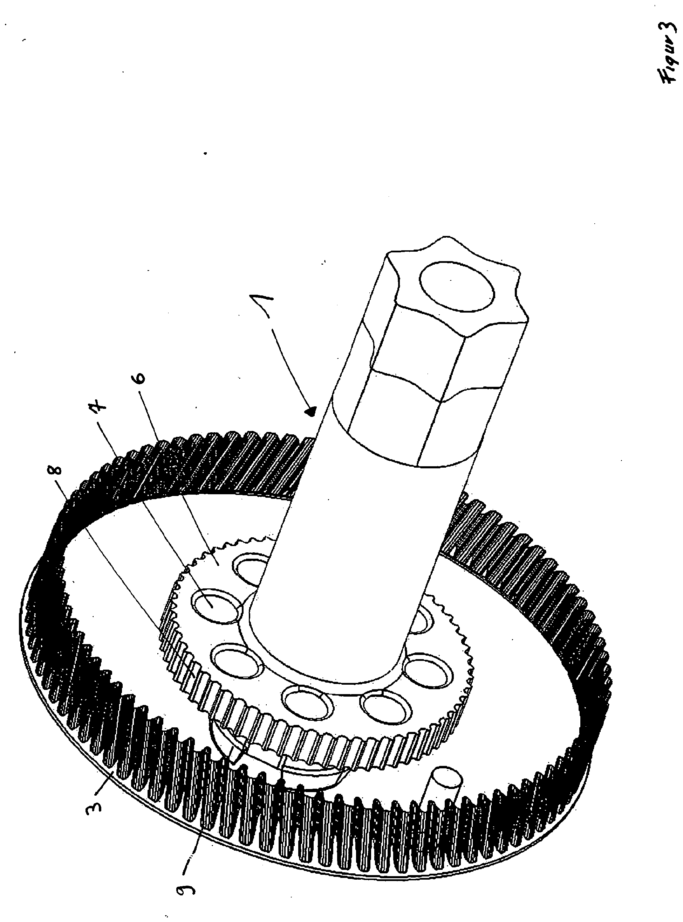

In Figur 3 wird in einer perspektivischen Ansicht gezeigt, wie das Zahnrad 3, welches als Stirnzahnrad ausgeführt ist, die Antriebswelle 1 umschließt. Das Zahnrad umschließt dabei gleichzeitig auch die als Stirnrad mit Öffnungen 7 ausgeführte Variante des vergrößerten Wellendurchmessers 6. Aufgrund der teilweisen transparenten Darstellung des Zahnrades ist ersichtlich, wie das Material des Zahnrades 3 beim Spritzgießen sowohl die Zahnzwischenräume 8 als auch die Öffnungen 7 des vergrößerten Wellendurchmessers 6 ausfüllt, um eine gute kraftschlüssige unlösbare Verbindung herzustellen.

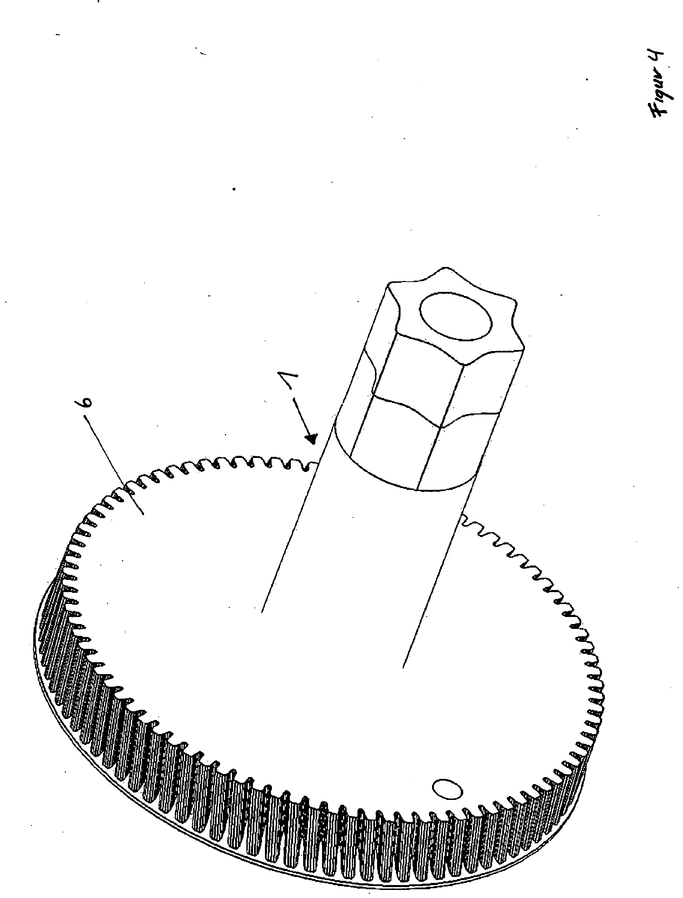

Die Figur 4 stellt das Zahnrad 3 mit der fest verbundenen Antriebswelle 1 in einer perspektivischen Ansicht wie zuvor in Figur 3 dar. Hier ist jedoch das Zahnrad nicht teilweise transparent dargestellt. Dargestellt ist in dieser Abbildung eine Verlängerung der Welle um einen Wellenabsatz 9 welcher in dieser Ausführungsform des Zahnrades beim Spritzgießen des Zahnrades entsteht. Der Wellenabsatz 9 ist entsteht z. B. nicht, wenn das Zahnrad nicht an einem der Wellenenden 2 oder 4 sondern mehr in Richtung der Wellenmitte die Welle umschließt.

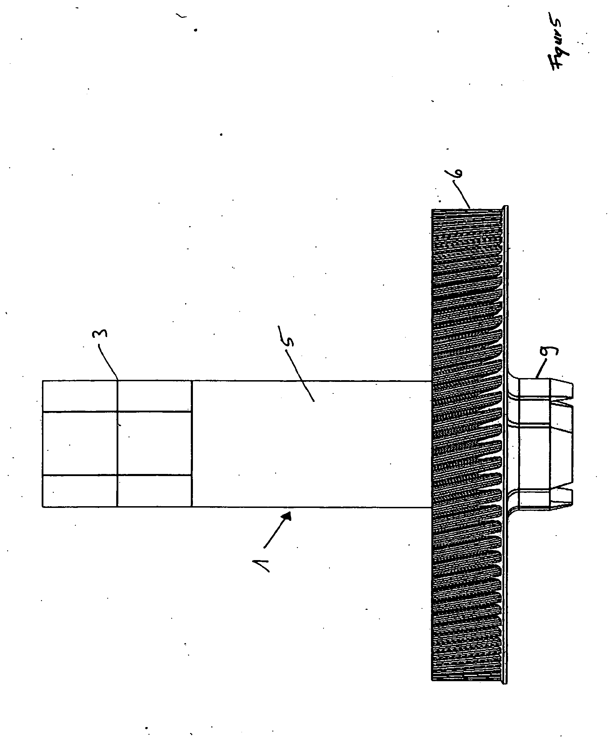

Figur 5 zeigt eine Draufsicht auf das Zahnrad 3 mit der fest verbundenen Antriebswelle 1. Je nach Oberflächenbeschaffenheit der Ausführungsart kann der Wellenabsatz 9 wie der Bereich 5 mit Lack versehen werden, um eine gute Lagerstelle zu bieten.

Weitere Ausführungsformen, welche nicht durch Figuren dargestellt werden sind wie folgt:
In einer anderen Ausführungsform weist der Verbindungsbereich der Welle die Form einer Scheibe oder einer koaxialen Ringscheibe auf.

In einer weiteren Ausführungsform ist der Verbindungsbereich eine Scheibe, die Vorsprünge, Ausnehmungen, Öffnungen und/oder Anflachungen am äußeren Umfang und/oder an mindestens einer Seitenfläche aufweist. In einer weiteren Ausführungsform sind am äußeren Umfang der Scheibe Zähne angeordnet. Dies kann in einer Ausführungsform derart erfolgen, dass die Scheibe ein Stirnzahnrad ist.

In anderen Ausführungsformen beträgt das Verhältnis von Wellendurchmesser zum Scheiben- oder Zahnraddurchmesser 1:3 bis 1:5. Der Wellendurchmesser wird bei größeren zu übertragenden Leistungen größer und bei kleineren zu übertragenden Leistungen kleiner. Hierdurch kann konstruktiv auf den Einsatzzweck abgestimmt die verwendete Materialmenge begrenzt werden, um Gewicht und Materialkosten zu sparen. In einer weiteren nicht dargestellten Ausführungsform wird die Welle als Vollwelle ausgeführt.

In einer besonderen Ausführungsform ist das Zahnrad ein Stirnrad ist.

Eine Ausführungsform beinhaltet, dass die Welle mit einem Kunststofflack beschichtet ist.

In einer anderen Ausführungsvariante ist die Welle nur im Bereich der Lagerstellen mit einem Kunststofflack beschichtet.

Eine andere Ausführungsvariante beinhaltet, dass die Beschichtung mit einem Lack erfolgt, der durch Trocknung ausgehärtet wird und eine harte und glatte Oberfläche aufweist.

Eine Ausführungsvariante beinhaltet, dass das Zahnrad mit seiner Welle im Mehrkomponenten-Spritzgußverfahren oder Einlegeverfahren hergestellt ist.

Je nach Anwendungszweck ist das Kunststoffmaterial des Zahnrades in den möglichen Ausführungsvarianten vorzugsweise aus Polyoxymethylen, Polyamid, Polybutylenterephthalat, Polyphenylensulfid, Polyetheretherketon oder Polyprophylen.

Je nach Anwendungszweck ist das Kunststoffmaterial der Welle vorzugsweise aus Polyoxymethylen, Polyamid, Polybutylenterephthalat, Polyphenylensulfid, Polyetheretherketon oder Polyprophylen.

## Patentansprüche

1. Zahnrad drehfest auf einer Antriebswelle, wobei das Zahnrad aus gespritztem Kunststoff besteht und die Antriebswelle aus einem vom Zahnrad unterschiedlichem Kunststoffmaterial besteht, **dadurch gekennzeichnet,**
- **dass** die Welle vom Zahnrad umspritzt ist,
- **dass** die Welle aus Kunststoff besteht und dass der Kunststoff des Zahnrades eine höhere Elastizität besitzt als der Kunststoff der Welle, und
- **dass** die Welle, im Verbindungsbereich, an dem die Welle vom Zahnrad umspritzt ist, einen den Wellendurchmesser vergrößernden Verbindungsbereich aufweist.

2. Zahnrad mit Antriebswelle nach Anspruch 1, **dadurch gekennzeichnet, dass** der Verbindungsbereich der Welle die Form einer Scheibe aufweist.

3. Zahnrad mit Antriebswelle nach Anspruch 1 oder 2, **dadurch gekennzeichnet, dass** der Verbindungsbereich der Welle die Form einer koaxialen Ringscheibe besitzt.

4. Zahnrad mit Antriebswelle nach Anspruch 2 oder 3, **dadurch gekennzeichnet, dass** die Scheibe Vorsprünge, Ausnehmungen, Öffnungen und/oder Anflachungen am äußeren Umfang und/oder an mindestens einer Seitenfläche aufweist.

5. Zahnrad mit Antriebswelle nach Anspruch 4, **dadurch gekennzeichnet, dass** am äußeren Umfang der Scheibe Zähne vorstehen.

6. Zahnrad mit Antriebswelle nach einem der vorangehenden Ansprüche, **dadurch gekennzeichnet, dass** das Verhältnis von Wellendurchmesser zum Scheiben- oder Zahnraddurchmesser 1:3 bis 1:5 beträgt.

7. Zahnrad mit Antriebswelle nach einem der vorangehenden Ansprüche, **dadurch gekennzeichnet, dass** die Welle eine Hohlwelle ist.

8. Zahnrad mit Antriebswelle nach einem der vorangehenden Ansprüche, **dadurch gekennzeichnet, dass** das Zahnrad ein Stirnrad ist.

9. Zahnrad mit Antriebswelle nach einem der vorangehenden Ansprüche, **dadurch gekennzeichnet, dass** der Kunststoff des Zahnrades den vergrößernden Verbindungsbereich der Welle vollständig umschließt.

10. Zahnrad mit Antriebswelle nach einem der vorangehenden Ansprüche, **dadurch gekennzeichnet, dass** die Welle mit einem Kunststofflack beschichtet ist.

11. Zahnrad mit Antriebswelle nach einem der vorangehenden Ansprüche, **dadurch gekennzeichnet, dass** die Welle nur im Bereich der Lagerstellen mit einem Kunststofflack beschichtet ist.

12. Zahnrad mit Antriebswelle nach einem der vorangehenden Ansprüche, **dadurch gekennzeichnet, dass** nach Herstellung der Welle der vergrößerte Wellenbereich vom Kunststoff des Zahnrades umspritzt wird.

13. Zahnrad mit Antriebswelle nach einem der Ansprüche 11 bis 13, **dadurch gekennzeichnet, dass** die Beschichtung mit einem Lack erfolgt, der durch Trocknung ausgehärtet wird und eine harte und glatte Oberfläche aufweist.

14. Zahnrad mit Antriebswelle nach einem der vorangehenden Ansprüche, **dadurch gekennzeichnet, dass** das Zahnrad mit seiner Welle im Mehrkomponenten-Spritzgußverfahren oder Einlegeverfahren hergestellt ist.

15. Zahnrad mit Antriebswelle nach einem der vorangehenden Ansprüche, **dadurch gekennzeichnet, dass**
das Kunststoffmaterial des Zahnrades vorzugsweise aus Polyoxymethylen, Polyamid, Polybutylenterephthalat, Polyphenylensulfid, Polyetheretherketon oder Polyprophylen besteht; und/oder
das Kunststoffmaterial der Welle vorzugsweise aus Polyoxymethylen, Polyamid, Polybutylenterephthalat, Polyphenylensulfid, Polyetheretherketon oder Polyprophylen besteht.
